Europäisches Patentamt

**European Patent Office**

Office européen des brevets

(11) Publication number: **0 288 282**
**A1**

(12) # EUROPEAN PATENT APPLICATION

(21) Application number: **88303600.6**

(22) Date of filing: **21.04.88**

(51) Int. Cl.4: **B 29 C 53/30**

(30) Priority: **21.04.87 GB 8709441**

(43) Date of publication of application:
**26.10.88 Bulletin 88/43**

(84) Designated Contracting States:
**AT BE CH DE ES FR GB GR IT LI LU NL SE**

(71) Applicant: **Watson, Maurice Leslie**
**Five Hey Hordens Lane**
**Chapel-en-le-Frith Stockport Cheshire (GB)**

(72) Inventor: **Watson, Maurice Leslie**
**Five Hey Hordens Lane**
**Chapel-en-le-Frith Stockport Cheshire (GB)**

(74) Representative: **Mock, Hans et al**
**MARKS & CLERK Suite 301 Sunlight House Quay Street**
**Manchester M3 3JY (GB)**

(54) **A method of and apparatus for convoluting a tube.**

(57) A method of convoluting a tube (12), comprises locating the tube (12) on a rotary mandrel (1) and winding a flexible convolution-retaining element (10) helically around the rotating tube. Apparatus for convoluting a tube (12), comprises a mandrel (1) having a helically configured forming surface, means (4) for rotating the mandrel about its axis, means (7) for feeding a flexible convolution-retaining element to the mandrel for winding onto the tube (10) located thereon in use, and means for advancing the feeding means lengthwise of the mandrel at a rate adjusted to match the winding pitch of said element to said forming surface.

# Description

## A METHOD OF AND APPARATUS FOR CONVOLUTING A TUBE

This invention relates to a method of and apparatus for convoluting a tube.

It is known to produce helically convoluted tubes by blow-moulding and by heat and pressure-moulding. It is also known from U.K. Patent Specification 1543586 to produce helically convoluted flexible plastics tube by threading a pre-formed plain flexible tube over an axially movable non-rotatable plain-surfaced cylindrical mandrel, moving said mandrel and tube through a rotary convolution-forming head and applying, by means of the head, a convolution-retaining element to the tube, the said head being so shaped as to wind the retaining element in helical manner around said tube at a preset pitch, and thereafter either removing the convolution-retaining element or allowing it to remain when the tube has set into convoluted form either by cold compression or heat treatment and removing the convoluted tube so formed from the mandrel. This technique has the disadvantage that both the mandrel and the forming head are specific to a particular diameter or a very small range of diameters of tube to be convoluted.

It is an object of the present invention to provide a method of and apparatus for convoluting a tube in at least one embodiment of which the above disadvantage is obviated or mitigated.

According to a first aspect of the present invention there is provided a method of convoluting a tube, comprising locating the tube on a rotary mandrel and winding a flexible convolution-retaining element helically around the rotating tube. Preferably, the mandrel has a helically configured surface provided by a flexible forming element such as a rope removably applied to the mandrel before the tube is located thereon. In this way a plain mandrel of a certain diameter can be used to convolute tubes having a wide range of different diameters, the variable clearance between the tube and the mandrel being filled by ropes of different diameter helically wound around the mandrel so as to provide said forming surface of the mandrel.

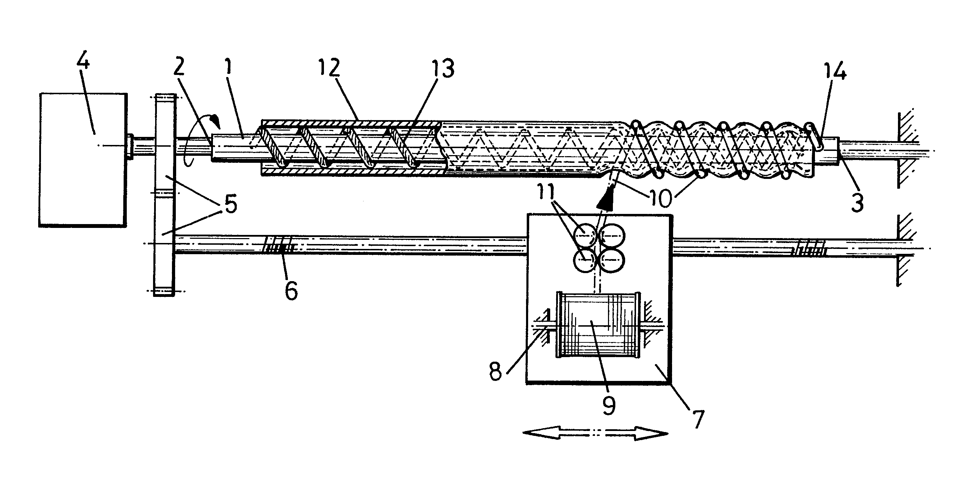

The invention will now be further described by way of example only with reference to the accompanying drawing which is a diagrammatic plan view of one embodiment of apparatus in accordance with the invention in use in the convolution of a tube.

Referring now to the drawing, a plain-surfaced mandrel 1 is held between centres 2, 3 for rotation by a motor 4. The motor drive is connected by gearing 5 to a lead screw 6 on which is mounted a carriage 7 carrying a support 8 for a reel 9 of metal wire 10 passing between guide rollers 11 on its path towards the mandrel 1. A hollow tube 12 of deformable synthetic plastics material is fitted on the mandrel 1 over a helically configured forming surface thereof provided by a rope 13 which is manually wound around the mandrel 1 before the tube 12 is fitted thereon. The diameter of the rope 13 is selected so as to fill the annular gap between the mandrel 1 and the inner surface of the tube 12.

In use, the rope 13 of appropriate diameter is first wound onto the mandrel 1 which is then removed from one of its centres 2, 3 to enable the tube 12 to be fitted thereon. At the start of the convoluting operation the carriage 7 is at the extreme righthand end of the lead screw 6. The wire 10 is fed from the reel 9 between the guide rollers 11 and inserted in a retaining hole 14 at the starting end of the mandrel 1. The motor 4 is then started to rotate the mandrel 1 with its configured surface formed by the rope 13 and the tube 12 fitted thereon while simultaneously acting through the gears 5 to drive the lead screw 6 and cause the carriage 7 to advance in the direction towards the motor 4, i.e. towards the left in the drawing. The wire 10 is fed at a predetermined tension set by the rollers 11. As the carriage 7 advances the wire 10 winds helically onto the tube 12 with a tension sufficient to unite the tube and the mandrel to prevent relative rotation thereof. The rate of advance of the carriage 7 determines the pitch of the helix formed by the wire 10 and care is taken to ensure that this pitch corresponds to that of the rope 13 off-set by half a turn so that the wire 10 follows the helical groove defined by the rope 13. By deforming the wall of the tube 12 into this groove to a greater or lesser extent relatively deep or shallow corrugations are formed in the tube by the forming rope 13.

When the tube 12 is fully convoluted the mandrel 1 is arrested with the carriage 7 adjacent the lefthand end of the tube 12. The wire 10 is cut and the coiled wire is permitted to relax slightly whereupon the cut end of the wire is taped to the lefthand end of the tube 12. The tube 12 with the wire 10 wound thereon is then removed by pulling it from the mandrel 1 which may, if necessary, be rotated slowly in the reverse direction in order to facilitate the removal. The coiled wire 10 may be left in position on the tube 12 as a reinforcement or, alternatively, it may be removed.

The tube 12 is made of synthetic plastics, preferably thermoplastics, material, e.g. polytetrafluoroethylene (PTFE) and may have a wall thickness of up to for example 4mm. The diameter of the tube may be within the size range from one quarter of an inch up to six inches but larger sizes are contemplated. If necessary or appropriate, the tube 12 may be pre-warmed so as to assist the process of convolution.

The wire used for forming the convolutions in accordance with the present invention may be composed of any suitable material strong enough to achieve the particular tension desired for optimum convolution. Where the nature of the tubing is such that it would be unduly soft with respect to the wire used in convoluting the tubing, for example if the use of glass-filled PTFE wire were to be required for use in corrosive conditions, the original wire used in the method of the invention may be removed from the convoluted tube formed whilst still on the mandrel and replaced with a softer wire, as above or with any other thermoplastic wire, when the application for which the product is intended requires the presence of such a softer wire.

Wires of various types and materials may thus be used, selected from a wide range of cross-sectional area, to offer enhanced support to the convoluted tubing, to improve pressure bearing or reduce fatigue, or to stand proud of the crests of the convolutions so as to keep any externally applied braiding or other covering material from chafing the convoluted tubing.

For specific applications, small diameter hollow tubing may be wound into convolution by the method of the invention for use in carrying a heating or cooling medium around the helical convolutions through the small tubing, so that when made into an assembly complete with appropriate fittings the medium being transferred through the tubing can be kept at a constant temperature.

It will be appreciated that the method described above may be modified in various ways. Firstly, the helically configured forming surface of the mandrel may be an integral part thereof produced by an appropriate machining operation. Secondly, instead of a rope the flexible forming element may be a wire which remains as a reinforcement in the tube after its removal from the mandrel. Thirdly, the forming element may be provided on only that part of the mandrel at which the convoluting operation commences if, has been found in certain cases, the forming action of the rope is not required once the operation has been satisfactorily started. Fourthly, it has also been found that it is possible to dispense altogether with the helically configured forming surface by using a plain-surfaced mandrel which is a snug fit in the plastics tube such that helical winding of the wire onto the tube forms only very small or no perceptible convolutions. Subsequent axial compression of the rotating tube from one end, combined if necessary with localised heating, causes convolutions to project between the turns of the retaining wire progressively from that end. Heat may be provided in the form of hot air and delivered by a nozzle which is moved in advance of the wave of emerging convolutions. When the convolutions have emerged up to about the mid-point of the tube, it may be compressed from the opposite end after reversal on the mandrel. A further possibility is for the tube to be compressed and heated from both ends simultaneously. Fifthly, a tube that has been convoluted by any of the methods described above may be subjected to axial compression while rotating with the mandrel, thereby to compress the convolutions, i.e. increase the number of turns per unit length.

It will be appreciated that the convoluting wire may comprise any suitable flexible convolution-retaining element of sufficiently high tensile strength for its purpose. Thus, a cord or rope may be used as the convolution retaining element.

It will be appreciated that once the tube has been convoluted it may be provided with an outer jacket and end fittings in subsequent operations not forming part of the present invention. If necessary, the ends of the tube may be de-convoluted, i.e. have their convolutions removed, in order to receive the fittings.

## Claims

1. A method of convoluting a tube, comprising locating the tube on a rotary mandrel and winding a flexible convolution-retaining element helically around the rotating tube.

2. A method as claimed in claim 1, wherein the mandrel has a helically configured forming surface and the convolution retaining element is wound around the tube with a corresponding pitch.

3. A method as claimed in claim 2, wherein said forming surface is part of the mandrel.

4. A method as claimed in claim 2, wherein said forming surface is provided by a flexible forming element removably applied to the mandrel before the tube is located thereon.

5. A method as claimed in claim 4, wherein the forming element remains as a reinforcement in the tube after its removal from the mandrel.

6. A method as claimed in claim 4, wherein the forming element is a rope or the like.

7. A method as claimed in claim 1, wherein the rotating tube is subjected to axial compression and heat treatment after the winding operation in order to promote convolution formation between the turns of the convolution-retaining element.

8. A method as claimed in any one of the preceding claims, wherein the tube is made of sythetic plastics material and the convolution-retaining element is a metal wire or hollow tubing.

9. Apparatus for convoluting a tube, comprising a mandrel having a helically configured forming surface, means for rotating the mandrel about its axis, means for feeding a flexible convolution-retaining element to the mandrel for winding onto the tube located thereon in use, and means for advancing the feeding means lengthwise of the mandrel at a rate adjusted to match the winding pitch of said element to said forming surface.

4   2   1   12   13   14

5   6   11   10   3

8   9   7

0288282

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 832 096  (KRAMER)<br>* Whole document * | 1-3,6-9 | B 29 C   53/30 |
| Y | | 4,5 | |
| | --- | | |
| X | US-A-4 308 228  (KRAMER)<br>* Whole document * | 1-4,8,9 | |
| | --- | | |
| X | BE-A-  561 696  (SOCIETE:<br>LUXEMBOURGEOISE DE BREVETS)<br>* Page 7, paragraph 3 * | 1-4,8,9 | |
| | --- | | |
| X | US-A-4 134 958  (DUNICHEV)<br>* Figure; abstract; column 6, lines 26-34 * | 1,7-9 | |
| | --- | | |
| X | US-A-3 327 039  (W.M.J. RÜCKERT)<br>* Figures 2,3; column 3, lines 64-70 * | 1-4,8 | |
| | --- | | |
| X | DE-C-  329 446  (ASBEST- UND GUMMIWERKE ALFRED CALMON)<br>* Figure * | 1-4 | |
| | | . | TECHNICAL FIELDS SEARCHED (Int. Cl.4) |
| X | CH-A-  273 782  (DÄTWYLER)<br>* Figures; page 2, lines 37-42 * | 1,9 | B 29 C |
| | --- | | |
| Y | US-A-1 797 193  (E.G. KIMMICH)<br>* Figures, references 11,15,19 * | 4,5 | |
| A | | 1-3,6-9 | |
| | --- | | |
| A | DE-A-2 620 718  (DEUTSCHE SEMPERIT)<br>* Figure 1; page 4, paragraphs 2,3 * | 1-9 | |
| | --- | | |
| A | SU-A-  376 248  (CHERESHKEVICH)<br>* Whole document *<br>--- | 1-9 | |
| | -/- | | |

The present search report has been drawn up for all claims

| Place of search | Date of completion of the search | Examiner |
|---|---|---|
| THE HAGUE | 11-07-1988 | CORDENIER J. |

EPO FORM 1503 03.82 (P0401)

European Patent
Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 550 099 (VANCE) <br> * Whole document * <br> --- | 1-9 | |
| A | DE-B-1 209 279 (UNITED STATES CATHETER & INSTRUMENT) <br> * Figures * <br> --- | 7 | |
| A | US-A-4 053 275 (KRAMER) <br> * Figures; column 5, lines 43-48 * <br> --- | 5,7,8 | |
| A | US-A-2 879 953 (KRAMER) <br> * Figures * <br> --- | 9 | |
| A | GB-A-2 126 685 (STANDARD HOSE LTD) <br> * Figures; abstract * <br> --- | 1-9 | |
| A | GB-A- 375 676 (KOPETZ) <br> * Figures * <br> --- | 1-9 | |
| D,A | GB-A-1 543 586 (B.F. WHITWORTH) <br> * Whole document * <br> ----- | 1-9 | TECHNICAL FIELDS SEARCHED (Int. Cl.4) |

The present search report has been drawn up for all claims

| Place of search | Date of completion of the search | Examiner |
|---|---|---|
| THE HAGUE | 11-07-1988 | CORDENIER J. |